# EUROPEAN PATENT APPLICATION

(11) **EP 4 786 285 A1**
(43) Date of publication of application: **05.08.2026**
(21) Application number: 26154268.2
(22) Date of filing: 27.01.2026
(51) Int. Cl.: B60R 19/12, B60K 11/08

(54) **VEHICLE FRONT STRUCTURE**

(30) Priority: 31.01.2025 JP 2025014909
(71) Applicant: Suzuki Motor Corporation, Hamamatsu-shi, Shizuoka 432-8611 (JP)
(72) Inventor: TOMIOKA, Ryota, HAMAMATSU-SHI, 432-8611 (JP); UCHIDA, Hiroki, HAMAMATSU-SHI, 432-8611 (JP); NOZAKI, Kenichi, HAMAMATSU-SHI, 432-8611 (JP)
(74) Representative: Plasseraud IP

(57) **Abstract**

[Object] Provided is a vehicle front structure capable of efficiently protecting non-occupants.

[Means to Solve the Problems] A vehicle front structure (100) includes: two side frames (114) and (116); a first cross member (118) spanning across front ends of the side frames (114) and (116); a second cross member (120) disposed above the first cross member (118) ; a bumper member (104) mounted in front of the first cross member (118) and the second cross member (120); a bumper opening portion (110) open in the bumper member (104); and a shroud (124) disposed rearward of the bumper member (104). The shroud (124) has: an air inlet (142) open along the bumper opening portion (110); an air outlet (144) open in an area between the first cross member (118) and the second cross member (120); and an upright wall portion (180) extending upward from a front end of an upper surface portion (146) connecting an upper side of the air inlet (142) and an upper side of the air outlet (144) to each other.

## Description

### [Field of the Invention]

The present invention relates to a vehicle front structure.

### [Background of the Invention]

Vehicles in recent years are required to meet increasingly stringent standards in terms of protecting non-occupants, such as pedestrians. For example, vehicle types designed for off-road driving tend to have higher vehicle heights because they are designed to handle rough road surfaces of, for example, bad roads or snowy roads. Such vehicle types may use a cross member in a front part of the vehicle that is located at the knee height of pedestrians, and are also required to be designed to reduce the injury level of pedestrians.

For example, FIG. 4 in Patent Document 1 discloses a first cross member 104. The first cross member 104 is a highly rigid member constituting a frame of a vehicle, and extends in the vehicle width direction at front ends of side frames 102a and 102b.

### [Prior Art Documents]

### [Patent Documents]

[Patent Document 1] JP 2019-64506A

### [Summary of the Invention]

### [Problems to be Solved by the Invention]

When the first cross member 104 is located at the knee height of pedestrians, some measure needs to be taken to absorb energy on the front side of the first cross member 104 to protect pedestrians.

In view of the foregoing problem, the present invention aims to provide a vehicle front structure capable of efficiently protecting non-occupants.

### [Means to Solve the Problems]

To solve the above-stated problem, a representative configuration of a vehicle front structure according to the present invention is characterized by a vehicle front structure including: two side frames extending in a front-rear direction along respective side portions of a vehicle; a first cross member spanning across front ends of the two side frames along a vehicle width direction; a second cross member extending in the vehicle width direction and disposed at a position spaced apart and upward of the first cross member; a bumper member mounted in front of the first cross member and the second cross member; a bumper opening portion that is open in a predetermined area of the bumper member in a center thereof with respect to the vehicle width direction; and a shroud disposed rearward of the bumper member, surrounding the bumper opening portion, and extending from the bumper member toward an area between the first cross member and the second cross member, the shroud having: an air inlet that is open along the bumper opening portion; an air outlet that is open in the area between the first cross member and the second cross member; and an upright wall portion extending upward from a front end of an upper surface portion connecting an upper side of the air inlet and an upper side of the air outlet to each other.

### [Effect of the Invention]

According to the present invention, it is possible to provide a vehicle front structure capable of efficiently protecting non-occupants.

### [Brief Explanation of the Drawings]

FIG. 1 shows an overview of a vehicle front structure according to an example of the present invention.
FIG. 2 shows a frame member shown in FIG. 1(b).
FIG. 3 shows the vehicle front structure shown in FIG. 1(a), as viewed from the front.
FIG. 4 shows a shroud shown in FIG. 3(b) alone.
FIG. 5 includes perspective views of the shroud shown FIG. 4(a).
FIG. 6 includes cross-sectional views of FIG. 4(a).
FIG. 7 is a cross-sectional view of the vehicle front structure shown in FIG. 3(a), taken along line D-D.
FIG. 8 is a cross-sectional view of the vehicle front structure shown in FIG. 3(a), taken along line E-E.
FIG. 9 is a cross-sectional view of the vehicle front structure shown in FIG. 3(a), taken along line F-F.
FIG. 10 shows the comparison between a shroud according to an example of the present invention and a shroud in a conventional example.
FIG. 11 includes schematic views illustrating collision tests for the shrouds shown in FIG. 10.

### [Embodiments of the Invention]

A vehicle front structure according to one embodiment of the present invention is characterized by a vehicle front structure including: two side frames extending in a front-rear direction along respective side portions of a vehicle; a first cross member spanning across front ends of the two side frames along a vehicle width direction; a second cross member extending in the vehicle width direction and disposed at a position spaced apart and upward of the first cross member; a bumper member mounted in front of the first cross member and the second cross member; a bumper opening portion that is open in a predetermined area of the bumper member in a center thereof with respect to the vehicle width direction; and a shroud disposed rearward of the bumper member, surrounding the bumper opening portion, and extending from the bumper member toward an area between the first cross member and the second cross member, the shroud having: an air inlet that is open along the bumper opening portion; an air outlet that is open in the area between the first cross member and the second cross member; and an upright wall portion extending upward from a front end of an upper surface portion connecting an upper side of the air inlet and an upper side of the air outlet to each other.

According to this configuration, when a pedestrian or the like comes into contact with the bumper member, the shroud retracts such that the upright wall portion is pushed by the bumper member and the upper surface portion moves into an area between the first and second cross members. This allows deformation of the bumper member. Further, the retraction of the shroud is properly suppressed due to the upright wall portion interfering with the second cross member. This prevents the bumper member from colliding with the second cross member or other frame members. Thus, this configuration makes it possible to mitigate the impact when a non-occupant such as a pedestrian comes into contact with the bumper member, and to efficiently protect the non-occupant.

The vehicle front structure may further include: a third cross member disposed rearward of the first cross member and spanning across the two side frames along the vehicle width direction; and at least one cross member brace spanning across the first cross member and the third cross member along the front-rear direction.

According to this configuration, the rigidity of the vehicle body can be increased by installing the third cross member and the cross member brace in the rear of the first cross member. In particular, the third cross member and the cross member brace are installed rearward of the first cross member, and therefore does not inhibit pedestrian protection achieved by the shroud located forward of the first cross member. Thus, this configuration can increase the rigidity of the vehicle body and improve pedestrian protection performance.

The shroud may further have: a bulging portion formed by bulging a predetermined area from the upright wall portion to the upper surface portion to expand the air inlet; and a plurality of vertical ribs arranged along the vehicle width direction on an upper side of the bulging portion, the bulging portion may have a height from the upper surface portion that decreases with increasing distance to the rear from the upright wall portion, and the plurality of vertical ribs may extend from the upright wall portion to the upper surface portion over the upper side of the bulging portion while being inclined rearward and obliquely downward.

The bulging portion expands the air inlet and allows air to smoothly flow rearward. Also, the plurality of vertical ribs are provided on the upper side of the bulging portion, and are able to come into contact with the second cross member when the shroud retracts. This allows the shroud to smoothly retract to the area between the second and first cross members by being guided along the inclined shape of the vertical ribs while reducing friction with the second cross member.

The shroud may has a lower surface portion connecting a lower side of the air inlet and a lower side of the air outlet to each other, the lower surface portion having: an upper section extending along an upper surface of the first cross member; at least one seating surface portion formed along a front surface of the first cross member and fixed to the front surface; at least one lower section extending forward from a lower side of the seating surface portion; and at least one connection portion provided at a front end of the lower surface portion and connected to the bumper member.

When the shroud is pushed against the bumper member, the shroud moves to rotate upward and rearward about the seating surface portion as a rotation center provided in the lower surface portion. This movement allows the shroud to retract efficiently toward the area between the first and second cross members.

The lower surface portion of the shroud may further have: an inclined section formed in an area other than the at least one seating surface portion in the vehicle width direction and extending forward and obliquely downward from the upper section; and at least one leg portion extending rearward and obliquely downward from a predetermined portion of a front end of the lower surface portion, and fixed to a front surface of the first cross member, and the inclined section and the leg portion may form a protruding shape tapered toward the bumper member as viewed from the vehicle width direction.

According to this configuration, when the bumper member is deformed, the shroud can receive the bumper member using its tapered protruding shape formed by the inclined section and the leg portion. The tapered protruding shape is deformed while being gradually crushed from its leading end side when pushed by the bumper member. With this, the amount of movement of the bumper member can also be reduced gradually. Thus, this configuration makes it possible to prevent the entire shroud from being crashed and the bumper member from colliding the first cross member or other cross members, while dispersing the load received by the bumper member via the shroud. Thus, pedestrians and the like can be protected.

The bumper member may have: a lower bumper having the bumper opening portion; a lattice-shaped lower net disposed in a rear area of the bumper opening portion; and a bumper coupling portion at which the lower net is coupled to a portion of the lower bumper below the bumper opening portion, and the connection portion may be connected to a portion of the lower net below the bumper coupling portion.

According to this configuration, the position of the bumper coupling portion and the position of the connection portion of the shroud are different in the up-down direction. With this, when a pedestrian or the like comes into contact with the lower bumper, the lower net can also retract easily. Thus, this configuration allows the bumper member to be deformed more easily when coming into contact with a pedestrian or the like.

### Examples

Preferable examples of the present invention will be described in detail below with reference to the attached drawings. Dimensions, materials, other specific values and the like in the examples are merely examples for facilitating understanding of the invention, and are not intended to limit the present invention unless stated otherwise. In the present specification and drawings, elements having substantially the same functions and configurations are assigned the same reference numerals to omit redundant descriptions, and elements that are not directly related to the present invention are omitted in the figures.

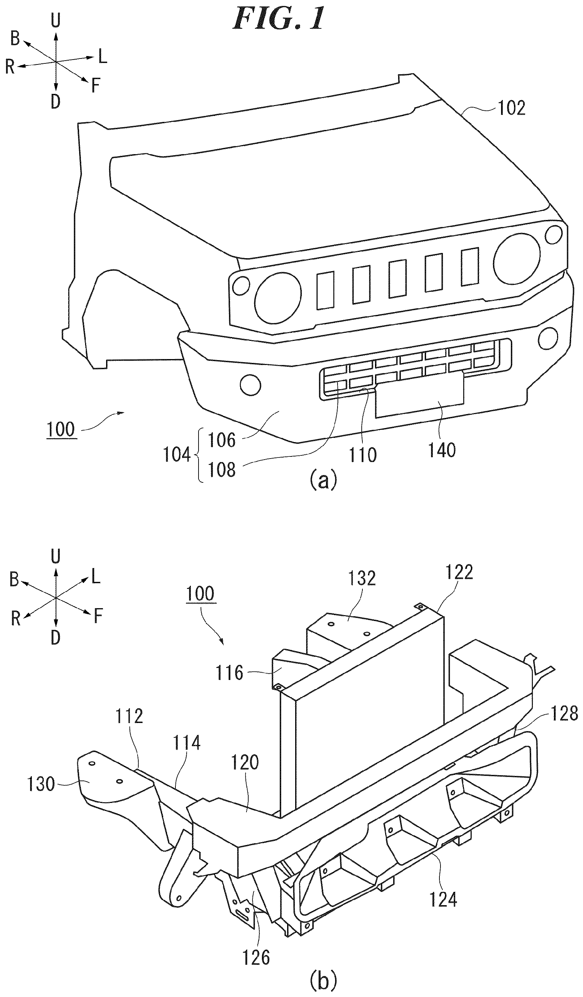

FIG. 1 shows an overview of a vehicle front structure 100 according to an example of the present invention. FIG. 1(a) shows a vehicle 102 in which the vehicle front structure 100 is implemented.

Hereinafter, in FIG. 1 and all of the other drawings of the present application, arrows F (Forward) and B (rearward) indicate the forward and rearward directions relative to the vehicle, arrows L (Leftward) and R (Rightward) indicate the left and right in the vehicle width direction, and arrows U (Upward) and D (Downward) indicate the upward and downward directions relative to the vehicle.

The vehicle front structure 100 is implemented in a front section of the vehicle 102 and includes a bumper member 104. The bumper member 104 includes a lower bumper 106 and a lower net 108. The lower bumper 106 is a member forming a bumper on a lower front side of the vehicle 102. The lower net 108 is a lattice-shaped member and is attached to the rear side of a bumper opening portion 110, which is open in the lower bumper 106.

FIG. 1(b) shows an internal structure of the vehicle front section shown in FIG. 1(a). The vehicle front section includes a frame member 112 constituting a framework.

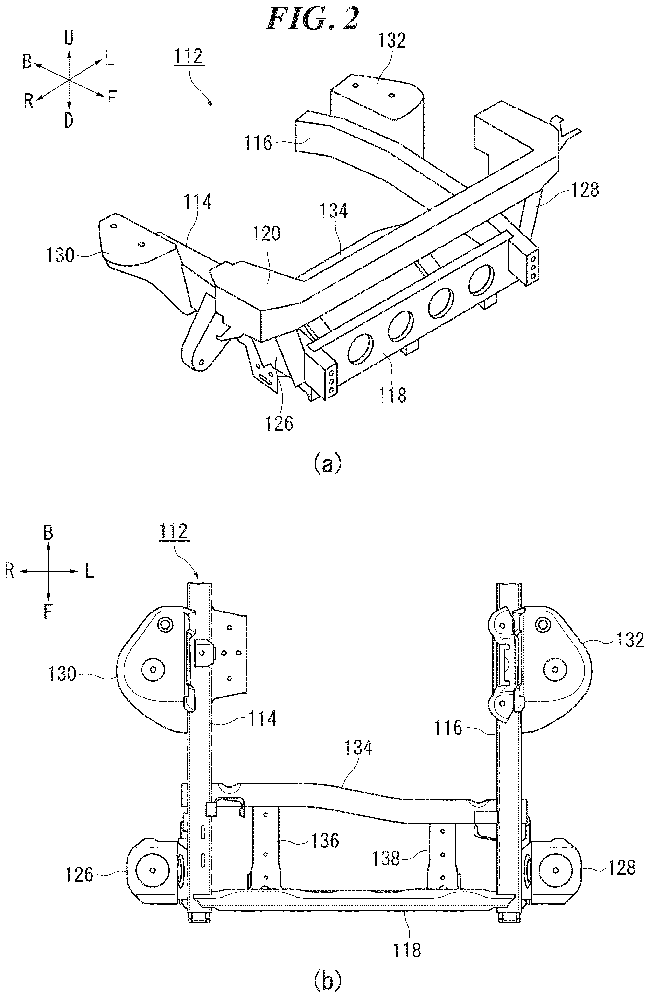

The frame member 112 is constituted by a plurality of members, including a pair of side frames 114 and 116, a first cross member 118 (see FIG. 2(a)), and a second cross member 120.

The vehicle front structure 100 includes a radiator 122 and a shroud 124. The radiator 122 is a heat exchanger for an engine or other components of a power plant. The radiator 122 is cooled by air sent from the shroud 124 during travel.

The shroud 124 is a member that directs the air taken in through the bumper opening portion 110 (see FIG. 1(a)) toward the radiator 122. The shroud 124 is disposed rearward of the bumper member 104 and is shaped to surround the bumper opening portion 110.

FIG. 2 shows the frame member 112 shown in FIG. 1(b). FIG. 2(a) is a perspective view of the frame member 112 shown in FIG. 1(b).

The side frames 114 and 116 extend in the front-rear direction along respective side portions of the vehicle 102 (see FIG. 1(a)). The side frames 114 and 116 have, for example, first mounts 126 and 128 supporting the second cross member 120, and spring brackets 130 and 132 supporting suspensions of front wheels (not shown), respectively.

The first cross member 118 spans across front ends of the side frames 114 and 116 along the vehicle width direction. Both ends of the first cross member 118 are joined to the respective side frames 114 and 116 by welding or the like.

The second cross member 120 is a member extending in the vehicle-width direction and disposed at a position spaced apart and upward of the first cross member 118. The second cross member 120 is supported by the side frames 114 and 116 via the first mounts 126 and 128.

FIG. 2(b) shows the frame member 112 shown in FIG. 2(b), as viewed from above. In FIG. 2(b), the second cross member 120 is omitted.

A third cross member 134 is disposed rearward of the first cross member 118 and spans across the side frames 114 and 116 along the vehicle width direction.

Cross member braces 136 and 138 span across the first cross member 118 and the third cross member 134 along the front-rear direction. The cross member braces 136 and 138 are equidistant from the center of the vehicle in the vehicle width direction to the right and left. The cross member braces 136 and 138 can increase torsional rigidity of the vehicle 102 and suppress vibrations or the like during travel.

The cross member braces 136 and 138 have slightly different dimensions but have substantially the same structure. Note that the number of cross member braces (136, 138) installed is not limited to two, but may also be one, three, or more.

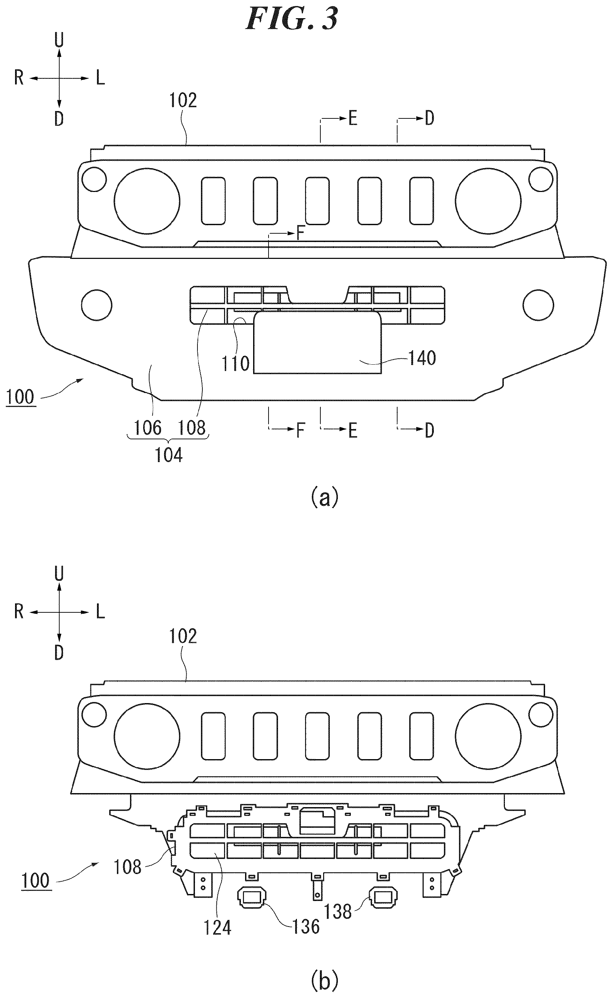

FIG. 3 shows the vehicle front structure 100 shown in FIG. 1(a), as viewed from the front. FIG. 3(a) shows the bumper member 104 shown in FIG. 1(a), as viewed from the front.

The bumper member 104 is attached to cover the front of the first cross member 118 and the second cross member 120 shown in FIG. 2(a).

The lower bumper 106 includes a plate holder 140 on which a number plate or the like can be installed, in its lower central section in the vehicle width direction. The bumper opening portion 110 is formed by opening an area of the lower bumper 106 at the center in the vehicle width direction and above the plate holder 140 into a shape that is elongate in the vehicle width direction.

FIG. 3(b) shows the vehicle front structure 100 with the lower bumper 106 shown in FIG. 3(a) removed. The lower net 108 is attached to the rear side of the bumper opening portion 110 of the lower bumper 106.

The lower net 108 has a shape that is elongate in the vehicle width direction along the bumper opening portion 110, and has a plurality of vertical and horizontal bars.

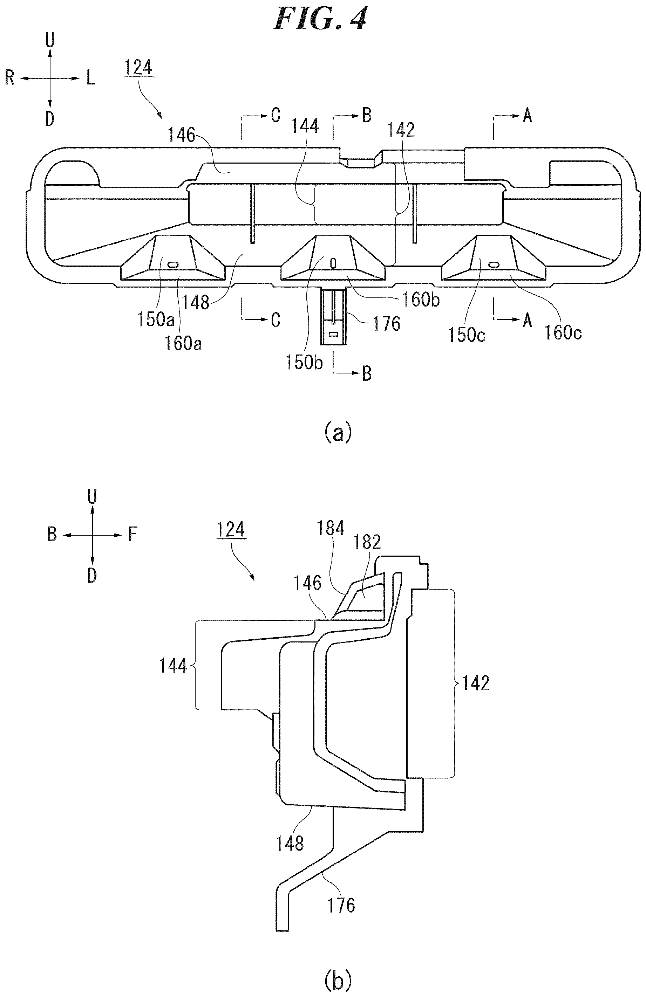

FIG. 4 shows the shroud 124 shown in FIG. 3(b) alone. FIG. 4(a) shows the shroud 124 as viewed from the front.

The shroud 124 has a shape that is elongate in the vehicle width direction along the bumper opening portion 110. The shroud 124 is made of a material such as polypropylene resin, and is relatively soft in comparison to the other members constituting the vehicle 102 (see FIG. 1(a)).

The shroud 124 has an air inlet 142 formed on the front side for taking in air, and an air outlet 144 formed on the rear side for sending air toward the radiator 122 (see FIG. 1(b)). The air outlet 144 has smaller dimensions than the air inlet 142, and the shroud 124 is overall tapered from the front side toward the rear side.

FIG. 4(b) shows the shroud 124 in FIG. 4(a), as viewed from the right side in the vehicle width direction. As mentioned above, the shroud 124 tapers from the air inlet 142 on the front side toward the air outlet 144 on the rear side.

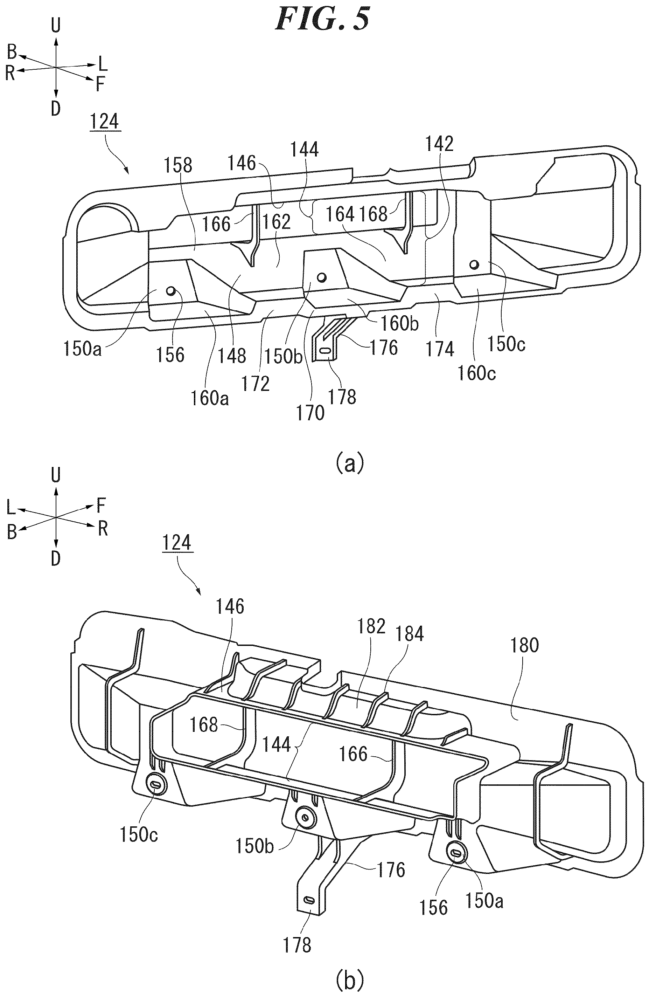

FIG. 5 includes perspective views of the shroud 124 shown FIG. 4(a). FIG. 5(a) is a perspective view of the shroud 124, as viewed from the front right.

A lower surface portion 148 is a portion forming the lower side of the shroud 124, and connects a lower side of the air inlet 142 and a lower side of the air outlet 144. The air outlet 144 is formed on a slightly upper side of the rear portion of the shroud 124. The lower surface portion 148 has steps and slopes at some portions.

The lower surface portion 148 includes seating surface portions 150a to 150c. The seating surface portions 150a to 150c are at locations fixed to the front surface of the first cross member 118 (see FIG. 2(a)). A total of three seating surface portions are provided at the center and left and right ends of the lower surface portion 148. The seating surface portions 150a to 150c are shaped along the front surface of the first cross member 118, and each have a through-hole 156 that allows for the use of a fastener, such as a clip, at their center side.

The lower surface portion 148 has an upper section 158, which is formed above the seating surface portions 150a to 150c. The upper section 158 is a region that is one step higher and to the rear of the lower surface portion 148, and is formed along the upper surface of the first cross member 118 (see FIG. 2(a)). The rear end of the upper section 158 forms the lower side of the air outlet 144.

The lower surface portion 148 also has lower sections 160a to 160c, which are formed below the seating surface portions 150a to 150c. The lower sections 160a to 160c extend forward, and have front ends forming the lower side of the air inlet 142.

The lower surface portion 148 includes inclined sections 162 and 164 in areas other than the seating surface portions 150a to 150c in the vehicle width direction. The inclined sections 162 and 164 extend forward and obliquely downward from the upper section 158. The inclined sections 162 and 164 include up-down ribs 166 and 168 supporting an upper surface portion 146 of the shroud 124.

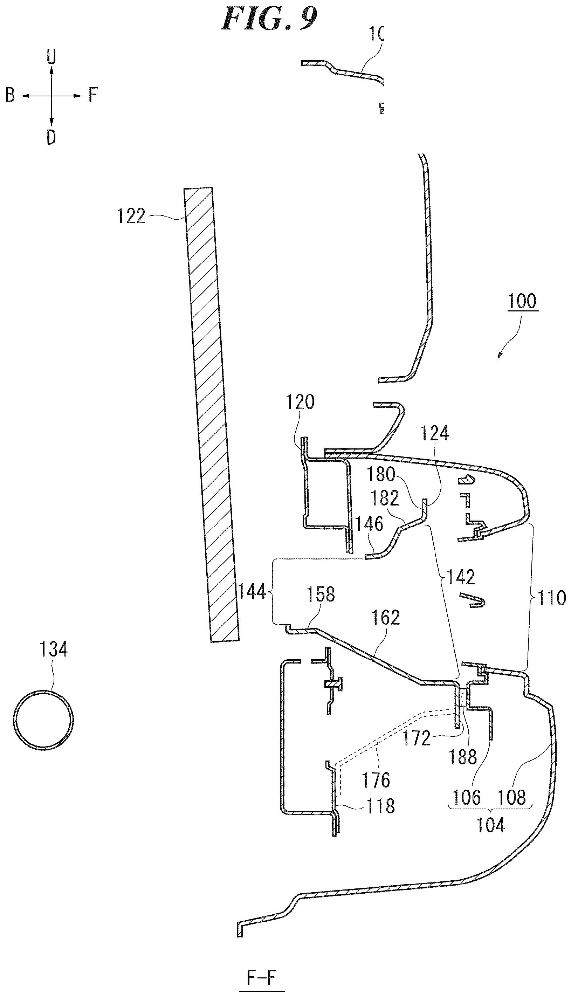

The lower surface portion 148 has a front end portion 170, which includes connection portions 172 and 174 at positions forward of the respective inclined sections 162 and 164. The connection portions 172 and 174 are portions connected to the lower net 108 of the bumper member 104 via an adhesive member 188 (see FIG. 9) or the like, and have a longer vertical length than other parts of the front end portion 170.

The shroud 124 also includes a leg portion 176 at its center in the vehicle width direction. The leg portion 176 extends rearward and obliquely downward from the center of the front end of the lower surface portion 148, and has a lower end portion 178 fixed to the front surface of the first cross member 118 (see FIG. 2(a)). Note that more than one leg portion 176 may be provided.

FIG. 5(b) is a perspective view of the shroud 124 as viewed from the right rear.

The upper surface portion 146 is a portion forming the upper side of the shroud 124, and connects an upper side of the air inlet 142 (see FIG. 5(a)) and an upper side of the air outlet 144.

An upright wall portion 180 is a portion extending upward from the front end of the upper surface portion 146, and has a flange shape formed around the air inlet 142 (see FIG. 5(a)).

A bulging portion 182 is formed by bulging a predetermined area from the upright wall portion 180 to the upper surface portion 146. The bulging portion 182 serves to expand the upper area of the air inlet 142 (see FIG. 5(a)).

A plurality of vertical ribs 184 are arranged in the vehicle width direction on the upper side of the bulging portion 182. The vertical ribs 184 extend in the front-rear direction from the upright wall portion 180 to the upper surface portion 146 located rearward thereof.

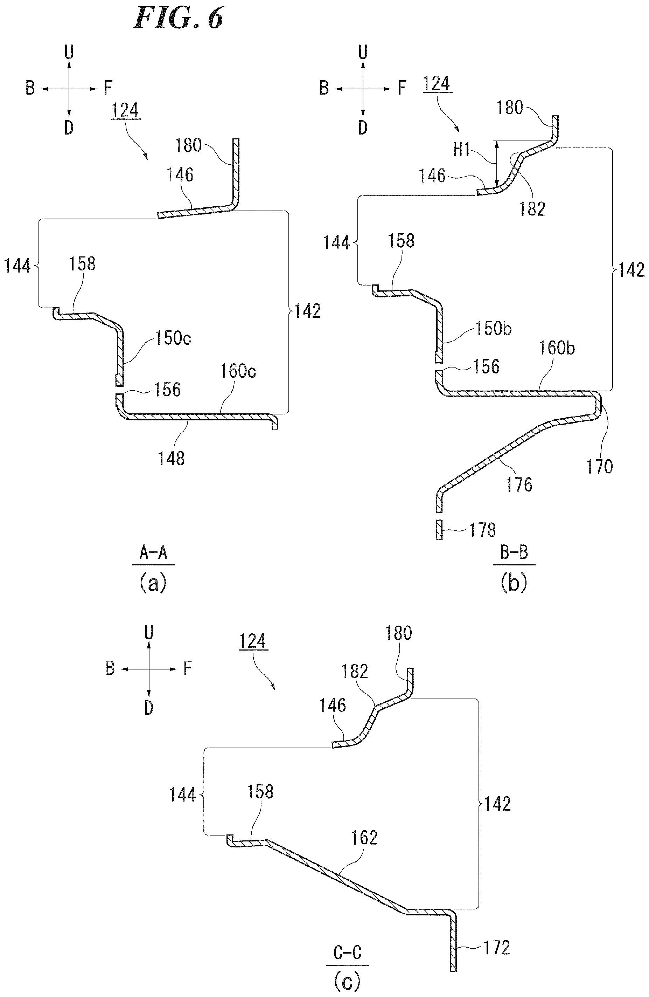

FIG. 6 includes cross-sectional views of the shroud 124 shown in FIG. 4(a). FIG. 6(a) is a cross-sectional view of the shroud 124 shown in FIG. 4(a), taken along line A-A. The cross-section taken along line A-A is a cross-section of the shroud 124 shown in FIG. 4(a) at a position near the left end of the air outlet 144.

The upper side of the shroud 124 is bent into an L-shape formed by the upper surface portion 146 and the upright wall portion 180. Each seating surface portion 150 has a through-hole 156 extending therethrough in the front-rear direction.

FIG. 6(b) is a cross-sectional view of the shroud 124 shown in FIG. 4(a), taken along line B-B. The cross-section taken along line B-B is a cross-section at the center in the vehicle width direction of the shroud 124 shown in FIG. 4(a).

The bulging portion 182 is formed by bulging a corner portion between the upright wall portion 180 and the upper surface portion 146 so as to curve and protrude upward. The bulging portion 182 has a height H1 from the upper surface portion 146 that decreases with increasing distance to the rear from the upright wall portion 180.

The leg portion 176 extends rearward and obliquely downward from the front end of the lower section 160b.

FIG. 6(c) is a cross-sectional view of the shroud 124 shown in FIG. 4(a), taken along line C-C. The cross-section taken along line C-C is a cross-section of the shroud 124 shown in FIG. 4(a) at a position to the right of the air outlet 144.

The inclined section 162 extends forward and obliquely downward from the upper section 158. The connection portion 172, which is connected to the lower net 108, is formed on the front side of the inclined section 162.

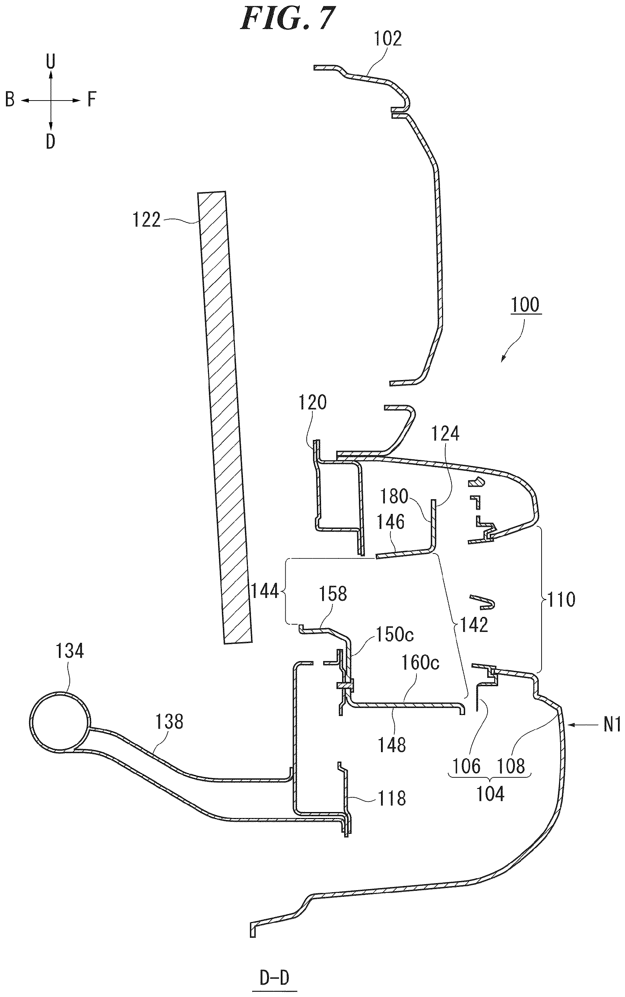

FIG. 7 is a cross-sectional view of the vehicle front structure 100 shown in FIG. 3(a), taken along line D-D. The cross-section of the vehicle front structure 100 taken along line D-D corresponds to the cross-section of the shroud 124 taken along line A-A in FIG. 6(a).

The shroud 124 is installed so as to surround the bumper opening portion 110 from the rear and extend from the bumper member 104 toward an area between the first cross member 118 and the second cross member 120.

The air inlet 142 is open along the bumper opening portion 110. The air outlet 144 is open at a position in an area between the first cross member 118 and the second cross member 120 in the up-down direction.

When a pedestrian or the like comes into contact with the bumper member 104, the bumper member 104 is subjected to a rearward load N1. Upon the load N1 pushing against the bumper member 104, the bumper member 104 pushes the upright wall portion 180 of the shroud 124 rearward.

When the upright wall portion 180 is pushed by the bumper member 104, the shroud 124 retracts such that the upper surface portion 146 enters the area between the first cross member 118 and the second cross member 120. The retraction of the shroud 124 allows deformation of the bumper member 104, thereby reducing resistance applied to a region around the knee of the pedestrian or the like and protecting the pedestrian or the like.

The amount by which the shroud 124 is retracted can furthermore be suitably limited due to the upright wall portion 180 abutting against the second cross member 120. This can prevent the bumper member 104 from colliding with the frame member 112, including the second cross member 120. Thus, the vehicle front structure 100 makes it possible to mitigate the impact when a non-occupant such as a pedestrian comes into contact with the bumper member, and to efficiently protect the non-occupant.

The cross member brace 138 extends forward and downward from the third cross member 134 toward the lower end of the first cross member 118 while being slightly bent.

The vehicle front structure 100 can increase the rigidity of the vehicle body by installing the third cross member 134 and the cross member braces 136 and 138 (see FIG. 2(b)) rearward of the first cross member 118. In particular, the third cross member 134 and the cross member braces 136 and 138 are installed rearward of the first cross member 118, and therefore do not inhibit pedestrian protection achieved by the shroud 124 located forward of the first cross member 118. Thus, the vehicle front structure 100 can increase the rigidity of the vehicle body and improve pedestrian protection performance.

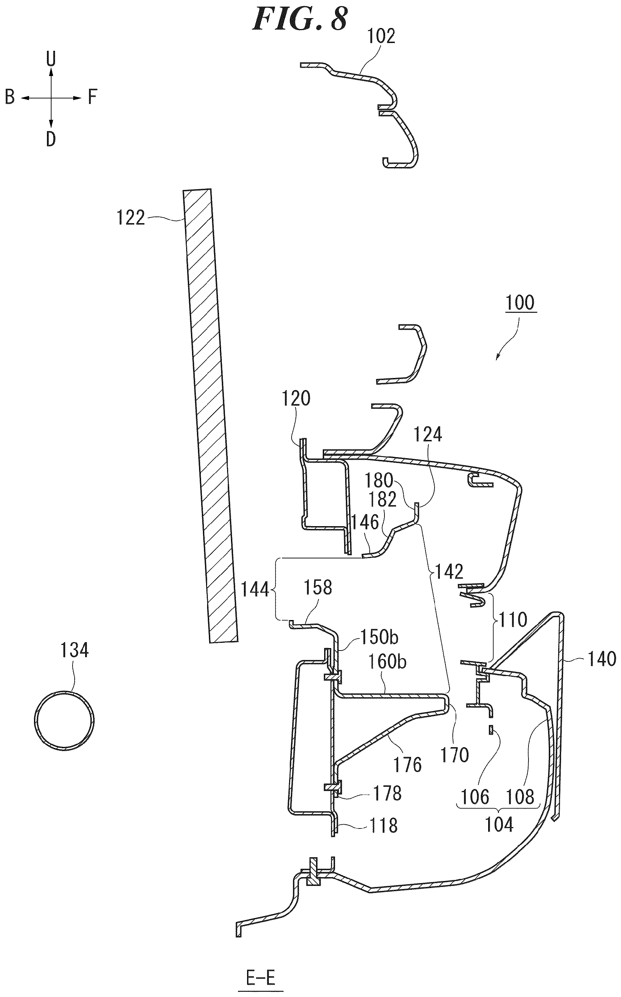

FIG. 8 is a cross-sectional view of the vehicle front structure 100 shown in FIG. 3(a), taken along line E-E. The cross-section of the vehicle front structure 100 taken along line E-E corresponds to the cross-section of the shroud 124 taken along line B-B in FIG. 6(b).

The height H1 of the bulging portion 182 shown in FIG. 6(b) has from the upper surface portion 146 decreases with increasing distance to the rear from the upright wall portion 180. Here, the bulging portion 182 has a shape that is gently curved along a parabola, or a shape gently rounded along a hysteresis curve, with increasing distance to the rear from the upright wall portion 180.

The vertical ribs 184 extend from the upright wall portion 180 to the upper surface portion 146 over the upper side of the bulging portion 182 while being inclined rearward and obliquely downward.

The bulging portion 182 expands the air inlet 142 and allows the air to smoothly flow rearward. Further, the vertical ribs 184 are provided on the upper side of the bulging portion 182 and are able to come into contact with the second cross member 120 shown in FIG. 8 when the shroud 124 retracts.

The shroud 124 shown in FIG. 8 can smoothly retract to the area between the second cross member 120 and the first cross member 118 by being guided along the inclined shape of the vertical ribs 184 (see FIG. 6(b)) while reducing friction with the second cross member 120.

FIG. 9 is a cross-sectional view of the vehicle front structure 100 shown in FIG. 3(a), taken along line F-F. The cross-section of the vehicle front structure 100 taken along line F-F corresponds to the cross-section of the shroud 124 taken along line C-C in FIG. 6(c).

The connection portion 172 of the shroud 124 is connected to the lower net 108 via the adhesive member 188.

When the shroud 124 is pushed against the bumper member 104, the shroud 124 rotates upward and rearward about fixing points of the seating surface portions, including the seating surface portion 150b (see FIG. 8), which are provided in the lower surface portion 148. This movement allows the shroud 124 to retract efficiently toward the area between the first cross member 118 and the second cross member 120.

The shroud 124 is a relatively soft member made of polypropylene resin or the like. This allows the shroud 124 to absorb the collision energy while being moderately crushed when the lower bumper 106 is retracted by contact with an external object.

For example, the inclined section 162 and the leg portion 176 of the shroud 124 form a protruding shape that is tapered toward the bumper member 104 as viewed from the vehicle width direction. Therefore, when the bumper member 104 is deformed, the shroud 124 can receive the bumper member 104 with its tapered protruding shape formed by the inclined section 162 and the leg portion 176.

The tapered protruding shape of the shroud 124 is deformed while being gradually crushed from the leading end side when pushed by the bumper member 104. Along with this, the shroud 124 can gradually reduce the amount of movement of the bumper member 104 while absorbing the collision energy.

Thus, the vehicle front structure 100 can prevent the shroud 124 from being entirely crashed and the bumper member 104 from colliding with the frame member 112, including the first cross member 118, while dispersing the load received by the bumper member 104 through the shroud 124. Thus, pedestrians and other non-occupants can be protected.

The bumper member 104 has a bumper coupling portion 186, which is a portion where the lower bumper 106 and the lower net 108 are coupled. A portion of the lower bumper 106 below the bumper opening portion 110 is coupled to the lower net 108 at the bumper coupling portion 186.

The connection portion 172 is connected to a portion of the lower net 108 below the bumper coupling portion 186. That is, the position of the bumper coupling portion 186 and the position of the connection portion 172 of the shroud 124 are different from each other in the up-down direction. With this, the lower net 108 can also easily retract when a pedestrian or the like comes into contact with the lower bumper 106. This configuration allows the bumper member 104 to be more easily deformed when coming into contact with a pedestrian or the like.

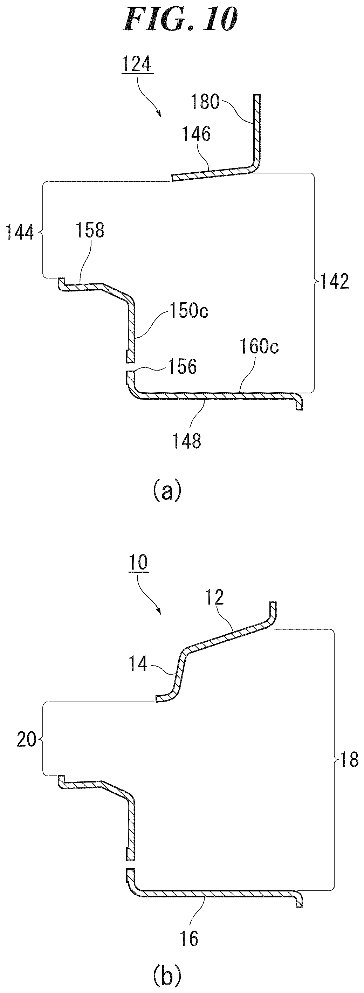

FIG. 10 shows the comparison between the shroud 124 according to the example of the present invention and a shroud 10 in a conventional example. In FIG. 10, the shroud 124 according to the example of the invention and the shroud 10 according to the conventional example are shown in correspondence with FIG. 6(a).

FIG. 10(a) shows the shroud 124 according to the example of the present invention. As shown in FIG. 10(a), the shroud 124 in the example has an upper section that is bent into an L-shape formed by the upper surface portion 146 and the upright wall portion 180.

FIG. 10(b) shows the shroud 10 in the conventional example. The shroud 10 is different with respect to its shape of the upper part from the shroud 124 shown in FIG. 10(a).

The shroud 10 has an upper surface portion 12 and a rear wall portion 14 formed in its upper section. The upper surface portion 12 extends forward and obliquely upward, expanding an air inlet 18. The rear wall portion 14 bends downward from the upper surface portion 12 and narrows an air outlet 20 relative to the air inlet 18. A lower surface portion 16 on the lower side of the shroud 10 has substantially the same shape as the lower surface portion 148 of the shroud 124 shown in FIG. 10(a).

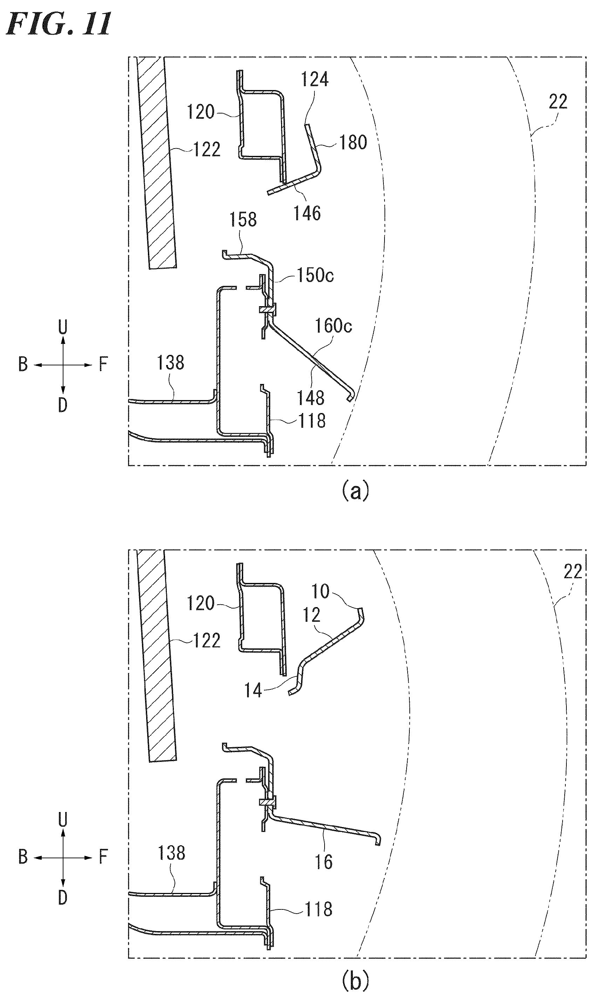

FIG. 11 includes schematic views illustrating collision tests for the shrouds shown in FIG. 10. FIG. 11(a) is a schematic view illustrating a collision test for the shroud 124 in the example shown in FIG. 10(a).

In the collision test, an impactor 22, which is a colliding body, is caused to collide with a region of the vehicle near the bumper and its deformation state is analyzed. Note that in FIG. 11, the bumper members are not shown in order to clearly show the shrouds.

When the impactor 22 collides, the shroud 124 in the example can efficiently receive a rearward load via the upright wall portion 180. As a result, the shroud 124 is deformed such that the upper surface portion 146 enters the area between the first cross member 118 and the second cross member 120, and absorbs the collision energy.

FIG. 11(b) is a schematic view illustrating a collision test for the shroud 10 in the conventional example shown in FIG. 10(b).

The shroud 10 in the conventional example does not have the upright wall portion 180 of the shroud 124 shown in FIG. 11(a). As a result, the shroud 10 is more likely to be deformed irregularly than the shroud 124 when the impactor 22 collides. Furthermore, the shroud 10 in the conventional example has the rear wall portion 14 and is therefore likely to interfere with the front wall of the second cross member 120.

As described above, the shroud 124 shown in FIG. 11(a) can absorb the impact energy of the impactor 22 more efficiently than the shroud 10 in the conventional example shown in FIG. 11(b). Therefore, the shroud 124 makes is possible to mitigate the impact when a non-occupant such as a pedestrian comes into contact with the bumper member 104 (see FIG. 7), and to efficiently protect the non-occupant.

Although preferable embodiments of the present invention have been described above with reference to the attached drawings, the present invention is, needless to say, not limited to the above-described example. It is apparent that a person skilled in the art may conceive various variations and modifications within the scope of the claims, and those variations and modifications should be understood to be naturally encompassed in the technical scope of the present invention.

### [Industrial Applicability]

The present invention is applicable to a vehicle front structure.

### [Index to the Reference Numerals]

100 ... Vehicle front structure; 102 ... Vehicle; 104 ... Bumper member; 106 ... Lower bumper; 108 ... Lower net; 110 ... bumper opening portion; 112 ... Frame member; 114, 116 ... Side frame; 118 ... First cross member; 120 ... Second cross member; 122 ... Radiator; 124 ... Shroud; 126, 128 ... First mount; 130, 132 ... Spring bracket; 134 ... Third cross member; 136, 138 ... Cross member brace; 140 ... Plate holder; 142 ... Air inlet; 144 ... Air outlet; 146 ... Upper surface portion; 148 ... Lower surface portion; 150a to 150c ... Sitting surface portion; 156 ... Through-hole; 158 ... Upper section; 160a to 160c ... Lower section; 162, 164 ... Inclined section; 166, 168 ... Up-down rib 170 ... Front end portion; 172, 174 ... Connection portion; 176 ... Leg portion; 178 ... Lower end portion; 180 ... Upright wall portion; 182 ... Bulging portion; 184 ... Vertical rib; 186 ... Bumper coupling portion; 188 ... Adhesive member; N1 ... Load; 10 ... Shroud; 12 ... Upper surface portion; 14 ... Rear wall portion; 16 ... Lower surface portion; 18 ... Air inlet; 20 ... Air outlet; 22 ... Impactor

## Claims

1. A vehicle front structure (100) comprising:
two side frames (114, 116) extending in a front-rear direction along respective side portions of a vehicle (102);
a first cross member (118) spanning across front ends of the two side frames (114, 116) along a vehicle width direction;
a second cross member (120) extending in the vehicle width direction and disposed at a position spaced apart and upward of the first cross member (118);
a bumper member (104) mounted in front of the first cross member (118) and the second cross member (120);
a bumper opening portion (110) that is open in a predetermined area of the bumper member (104) in a center thereof with respect to the vehicle width direction; and
a shroud (124) disposed rearward of the bumper member (104), surrounding the bumper opening portion (110), and extending from the bumper member (104) toward an area between the first cross member (118) and the second cross member (120),
the shroud (124) having:
an air inlet (142) that is open along the bumper opening portion (110);
an air outlet (144) that is open in the area between the first cross member (118) and the second cross member (120); and
an upright wall portion (180) extending upward from a front end of an upper surface portion (146) connecting an upper side of the air inlet (142) and an upper side of the air outlet (144) to each other.

2. The vehicle front structure (100) according to claim 1, further comprising:
a third cross member (134) disposed rearward of the first cross member (118) and spanning across the two side frames (114, 116) along the vehicle width direction; and
at least one cross member brace (136, 138) spanning across the first cross member (118) and the third cross member (134) along the front-rear direction.

3. The vehicle front structure (100) according to claim 1,
wherein the shroud (124) further has:
a bulging portion (182) formed by bulging a predetermined area from the upright wall portion (180) to the upper surface portion (146) to expand the air inlet (142); and
a plurality of vertical ribs (184) arranged along the vehicle width direction on an upper side of the bulging portion (182),
the bulging portion (182) has a height (H1) from the upper surface portion (146) that decreases with increasing distance to the rear from the upright wall portion (180), and
the plurality of vertical ribs (184) extend from the upright wall portion (180) to the upper surface portion (146) over the upper side of the bulging portion (182) while being inclined rearward and obliquely downward.

4. The vehicle front structure (100) according to claim 3,
wherein the shroud (124) has a lower surface portion (148) connecting a lower side of the air inlet (142) and a lower side of the air outlet (144) to each other, the lower surface portion (148) having:
an upper section (158) extending along an upper surface of the first cross member (118);
at least one seating surface portion (150a, 150b, 150c) formed along a front surface of the first cross member (118) and fixed to the front surface;
at least one lower section (160a, 160b, 160c) extending forward from a lower side of the seating surface portion (150a, 150b, 150c); and
at least one connection portion (172, 174) provided at a front end of the lower surface portion (148) and connected to the bumper member (104).

5. The vehicle front structure (100) according to claim 4,
wherein the lower surface portion (148) of the shroud (124) further has:
an inclined section (162, 164) formed in an area other than the at least one seating surface portion (150a, 150b, 150c) in the vehicle width direction and extending forward and obliquely downward from the upper section (158); and
at least one leg portion (176) extending rearward and obliquely downward from a predetermined portion of a front end of the lower surface portion (148), and fixed to a front surface of the first cross member (118), and
the inclined section (162, 164) and the leg portion (176) form a protruding shape tapered toward the bumper member (104) as viewed from the vehicle width direction.

6. The vehicle front structure (100) according to claim 4, wherein the bumper member (104) has:
a lower bumper (106) having the bumper opening portion (110);
a lattice-shaped lower net (108) disposed in a rear area of the bumper opening portion (110); and
a bumper coupling portion (186) at which the lower net (108) is coupled to a portion of the lower bumper (106) below the bumper opening portion (110), and
the connection portion (172, 174) is connected to a portion of the lower net (108) below the bumper coupling portion (186).
